# EUROPÄISCHE PATENTSCHRIFT

(11) **EP 3 489 112 B1**
(45) Veröffentlichungstag und Bekanntmachung des Hinweises auf die Patenterteilung: **30.12.2020**
(21) Anmeldenummer: 18203029.6
(22) Anmeldetag: 29.10.2018
(51) Int. Cl.: B62D 5/00, B62D 6/00, B62D 6/02, B62D 7/15

(54) **VERFAHREN UND LENKSYSTEM ZUM LENKEN EINES FAHRZEUGS**
METHOD AND STEERING SYSTEM FOR STEERING A VEHICLE
PROCÉDÉ ET SYSTÈME DE DIRECTION DESTINÉS À LA DIRECTION D'UN VÉHICULE

(30) Priorität: 22.11.2017 DE 102017220875
(43) Veröffentlichungstag der Anmeldung: 29.05.2019
(73) Patentinhaber: AUDI AG, 85045 Ingolstadt (DE)
(72) Erfinder: Obermüller, Anton, 85053 Ingolstadt (DE); Mihailescu, Adrian, 85057 Ingolstadt (DE); Hartinger, Ferdinand, 80799 München (DE); Diepold, Klaus, 86156 Augsburg (DE); Enning, Martin, 85049 Ingolstadt (DE); Wiedenmann, Christian, 85049 Ingolstadt (DE); Ortlechner, Michael, 85057 Ingolstadt (DE); Lehmann, Matthias, 85356 Freising (DE)

(56) Entgegenhaltungen:
- WO-A1-2011/155637
- DE-A1-102007 000 975
- DE-B3-102012 009 568

## Beschreibung

Die Erfindung betrifft ein Verfahren zum Lenken eines Fahrzeugs und ein Lenksystem zum Lenken eines Fahrzeugs.

Um das Fahrverhalten eines Fahrzeugs zu optimieren, ist dieses oft mit einer lenkbaren Hinterachse und/oder einer Überlagerungslenkung für eine Vorderachse ausgestattet. Hiermit kann das Fahrzeug situationsgerecht agilisiert oder stabilisiert und eine Lenkübersetzung variabel gestaltet werden. Die Lenkübersetzungen der Vorder- und Hinterachse, d. h. das Verhältnis von einem Lenkradwinkel zu einem sich jeweils einstellenden Radlenkwinkel an der Vorder- und Hinterachse, wirken sich auf einen Lenkaufwand, also das Verhältnis zwischen dem Lenkradwinkel und einem sich einstellenden Kurvenradius aus.

Bei einer Fahrt in eine Kurve kann sich der Kurvenradius bei gleichbleibendem Lenkradwinkel unerwünscht ändern und den Fahrer dazu zwingen, den Lenkradwinkel korrigieren zu müssen, also durch Verringern des Lenkradwinkels zuzulenken oder durch Vergrößern des Lenkradwinkels aufzulenken. Dies liegt daran, dass ein applizierter Lenkaufwand von der Geschwindigkeit variabel abhängig ist, wobei der Lenkaufwand bei hoher Geschwindigkeit größer und bei niedriger Geschwindigkeit kleiner wird. Wird der Lenkaufwand bspw. kleiner, muss der Fahrer auflenken, um einen gewünschten Kurvenradius beizubehalten. Aufgrund von physikalischen Gegebenheiten ist der Lenkaufwand auch ohne Hinterachs- und Überlagerungslenkung bezüglich der Geschwindigkeit des Fahrzeugs variabel, da sich bspw. eine Änderung eines Eigenlenkgradienten durch Änderung einer Querbeschleunigung des Fahrzeugs ergibt. Dies führt dazu, dass sich der Lenkaufwand beim Verzögern des Fahrzeugs verringert und der Fahrer in diesem Fall auflenken muss, um den gewünschten Kurvenradius beizubehalten.

Die Druckschrift DE 10 2006 017 406 A1 beschreibt ein Verfahren zum Betrieb eines Lenksystems eines Kraftfahrzeugs, bei dem mit einer Lenkhandhabe ein Lenkradwinkel als Maß für einen gewünschten Radlenkwinkel für wenigstens ein lenkbares Rad des Kraftfahrzeugs vorgegeben wird.

Ein Verfahren zum Betreiben einer Überlagerungslenkung wird in der Druckschrift DE 10 2007 000 975 A1 vorgestellt. Bei dem Verfahren kann eine Fahrgeschwindigkeit bei der Ermittlung einer Lenkübersetzung berücksichtigt werden, so dass die Lenkübersetzung in Abhängigkeit der Fahrgeschwindigkeit verändert wird.

Die Druckschrift DE 10 2007 053 818 A1 beschreibt ein Verfahren zum Betrieb einer Fahrzeug-Lenkeinrichtung mit variablem Übersetzungsverhältnis. Dabei werden ein vorgegebener Lenkwinkel und ein tatsächlich einzustellender Stellwinkel ermittelt und eine Vereinbarkeit des Stellwinkels mit dem Lenkwinkel überprüft.

Die Druckschrift DE 10 2012 009 568 B3 zeigt den Oberbegriff der unabhängigen Ansprüche und beschreibt ein Verfahren zum Betreiben einer Überlagerungslenkung eines Kraftwagens, mit der an einem Fahrwerk ein Radeinschlagwinkel auf einen Wert eingestellt wird, der aus einem an einer Lenkhandhabe erfassten und aus einem durch eine Überlagerungssteuerung festgelegten Überlagerungswinkel gebildet wird, wobei der Überlagerungswinkel durch die Überlagerungssteuerung in Abhängigkeit von einem an einem Signaleingang empfangenen Fahrgeschwindigkeitswert festgelegt wird.

Eine Fahrzeugfortbewegungssteuerungsvorrichtung ist aus der Druckschrift WO 2011/155637 A1 bekannt. Diese umfasst ein Lenkwinkelsteuermittel, das eine Beziehung eines Lenkwinkels lenkbarer Räder zu einem Lenkbetätigungsbetrag durch einen Fahrer ändert. Falls die Fahrzeugfortbewegungssteuerungsvorrichtung entscheidet, dass eine Fahrzeugtrajektorienssteuerung initiiert oder erneuert werden soll, ermittelt die Fahrzeugfortbewegungssteuerungsvorrichtung eine Sollankunftsposition und eine Solltrajektorie, die das Fahrzeug benötigt, um an der Sollankunftsposition in einer Sollfortbewegungsrichtung anzukommen. Die Solltrajektorie erstreckt sich von einer Position des Fahrzeugs zu einem Zeitpunkt der Entscheidung zu der Sollankunftsposition, wobei die Solltrajektorie auf der Grundlage eines Lenkungsbetätigungsbetrags durch einen Fahrer und einer Fahrzeuggeschwindigkeit zu dem Zeitpunkt der Entscheidung abgeleitet wird, wobei ein Solllenkwinkel der lenkbaren Räder zum Antreiben des Fahrzeugs entlang der Solltrajektorie berechnet und der Lenkwinkel der lenkbaren Räder durch das Lenkwinkelsteuerungsmittel gemäß dem Solllenkwinkel gesteuert wird.

Vor diesem Hintergrund war es eine Aufgabe, einen Lenkaufwand eines Fahrzeugs bei einer Fahrt durch eine Kurve zu minimieren.

Diese Aufgabe wird mit einem Verfahren und einem Lenksystem mit den Merkmalen der unabhängigen Patentansprüche gelöst. Ausgestaltungen des Verfahrens und des Lenksystems gehen aus den abhängigen Patentansprüchen und der Beschreibung hervor.

Das erfindungsgemäße Verfahren ist zum Lenken eines Fahrzeugs, bspw. eines Kraftfahrzeugs ausgebildet, das ein Lenksystem mit einem Lenkrad und eine vordere Achse sowie eine hintere Achse mit Rädern aufweist. Dabei wird von einem Fahrer des Fahrzeugs eine Richtung des Fahrzeugs durch Einstellen eines Lenkradwinkels des Lenkrads manuell eingestellt, wodurch und/oder wobei durch das Lenksystem für die Räder von mindestens einer der Achsen automatisch ein Lenkwinkel eingestellt wird, der sich aus dem Lenkradwinkel zuzüglich eines Überlagerungswinkels ergibt. Außerdem wird von einer automatisch einstellbaren Lenkübersetzung für Räder von mindestens einer der Achsen ein Verhältnis des Lenkradwinkels zu dem Lenkwinkel für die Räder festlegt. Bei dem Verfahren fährt das Fahrzeug mit einer Geschwindigkeit mit einem ersten Wert in eine Kurve auf einer Kreisbahn mit einem Radius, wobei von dem Fahrer ein Lenkradwinkel eingestellt wird. Dabei wird von dem Lenksystem unter Berücksichtigung einer Kennlinie für einen Zusammenhang des Überlagerungswinkels und der Geschwindigkeit automatisch ein von dem ersten Wert der Geschwindigkeit abhängiger Überlagerungswinkel eingestellt.

Bei dem Verfahren wird weiterhin mindestens ein Fall unter zwei möglichen Fällen berücksichtigt und/oder durchgeführt, wobei in beiden möglichen Fällen der Lenkradwinkel zunächst konstant gehalten wird und unverändert bleibt. In einem ersten Fall werden der Überlagerungswinkel und die Lenkübersetzung von dem Lenksystem konstant gehalten. Alternativ oder ergänzend wird in einem zweiten Fall von dem Lenksystem die Lenkübersetzung in Abhängigkeit von der Geschwindigkeit automatisch verändert und der Radius der Kreisbahn und damit der Lenkaufwand konstant gehalten.

In Ausgestaltung wird die Lenkübersetzung und damit der Überlagerungswinkel in dem ersten Fall konstant gehalten, bis der Fahrer den Lenkradwinkel ändert. Außerdem ist es im ersten Fall möglich, dass der Radius der Kreisbahn durch zusätzliches Einstellen des Überlagerungswinkels angepasst wird, wenn der Fahrer den Lenkradwinkel ändert. Im zweiten Fall ist es auch möglich, dass der Lenkradwinkel konstant gehalten wird.

In dem zweiten Fall wird der Radius der Kreisbahn, auf und/oder entlang der das Fahrzeug die Kurve durchfährt, durch zusätzliches Einstellen des Überlagerungswinkels so angepasst, dass bei konstant gehaltenem Lenkradwinkel der Lenkaufwand, d. h. das Verhältnis zwischen Lenkradwinkel und Kurvenradius, konstant ist. Das bedeutet, dass die Lenkübersetzung automatisch verändert wird, so dass der Lenkradwinkel in Folge bzw. nachfolgend konstant gehalten werden kann.

Im ersten Fall bleibt die Lenkübersetzung konstant, so lange der von dem Fahrer bei einem Einfahren in die Kurve eingestellte Lenkradwinkel konstant und somit gleich bzw. unverändert bleibt. Dagegen wird die Lenkübersetzung im ersten Fall geändert bzw. verändert, wenn der Lenkradwinkel ausgehend von dem bei dem Einfahren in die Kurve bereits bzw. zunächst eingestellte Lenkradwinkel von dem Fahrer zusätzlich verändert wird, wobei der Radius der Kreisbahn nahezu konstant bleibt. Somit bleibt der Lenkaufwand im zweiten Fall konstant.

Sofern im zweiten Fall der von dem Fahrer eingestellte Lenkradwinkel beibehalten wird, wird der Überlagerungswinkel und somit der Lenkwinkel für die Räder der mindestens einen Achse entsprechend einer Änderung der bspw. an den Wert der Geschwindigkeit angepassten und/oder anzupassenden Lenkübersetzung verändert. Dabei ist es möglich, dass der Radius der Kurvenbahn gleich bzw. konstant bleibt.

Falls im zweiten Fall der von dem Fahrer bei dem Einfahren in die Kurve eingestellte Lenkradwinkel weiter verändert wird, wird die Lenkübersetzung, bspw. unter Berücksichtigung einer funktionalen Abhängigkeit des Überlagerungswinkels und/oder der Lenkübersetzung von der Geschwindigkeit weiter automatisch verändert und der Lenkradwinkel in Folge konstant gehalten.

Es ist vorgesehen, dass das Fahrzeug mit dem ersten Wert der Geschwindigkeit fährt und eine Richtung des Fahrzeugs durch Einstellen des Lenkradwinkels durch den Fahrer bei der Fahrt in die Kurve verändert wird. Dabei ist es möglich, dass die Geschwindigkeit ausgehend von dem ersten Wert auf einen zweiten Wert verändert, bspw. bei einem Bremsen reduziert oder bei einem Beschleunigen vergrößert wird. Falls die Geschwindigkeit des Fahrzeugs im ersten Fall und/oder im zweiten Fall verändert wird, wird die Lenkübersetzung im zweiten Fall unter Berücksichtigung einer funktionalen Abhängigkeit der Lenkübersetzung von der aktuellen Geschwindigkeit und/oder einer Änderung der aktuellen Geschwindigkeit automatisch verändert, während sie im ersten Fall konstant gehalten wird, solange der Lenkradwinkel (von dem Fahrer) konstant gehalten wird. Im zweiten Fall wird jedoch die Lenkübersetzung unter Berücksichtigung der funktionalen Abhängigkeit der Lenkübersetzung von der Geschwindigkeit entgegen einer gemäß dem Stand der Technik vorgesehenen Anpassung der Lenkübersetzung so angepasst, dass der Lenkaufwand konstant bleibt, d. h. der Kurvenradius wird bei konstantem Lenkradwinkel durch Ausgleich der bei Kurvenfahrt wirkenden physikalischen Kräfte durch die erfindungsgemäß automatisch eingestellte Lenkübersetzung ebenfalls konstant gehalten. Der Fahrer muss somit weitestgehend keine Änderung des Lenkradwinkels zum Ausgleich der wirkenden physikalischen Kräfte vornehmen und wird dadurch entlastet.

In Ausgestaltung wird zum Einstellen des Lenkwinkels dem Lenkradwinkel der von dem ersten Wert der Geschwindigkeit abhängige Überlagerungswinkel hinzuaddiert, wobei es möglich ist, dass der Überlagerungswinkel anhängig von der Kennlinie, die die Abhängigkeit des Überlagerungswinkels von der Geschwindigkeit beschreibt, einen positiven Wert oder einen negativen Wert aufweist.

Üblicherweise wird das Verfahren nur bei und/oder aufgrund einer Änderung des Lenkradwinkels durch den Fahrer durchgeführt, d. h. insbesondere bei Einfahrt in eine Kurve bzw. auf eine zumindest in ihrem Verlauf gebogene Strecke.

Hierbei wird der von dem Fahrer jeweils aktuell eingestellte, bspw. auch durch Drehen des Lenkrads manuell veränderte Lenkradwinkel beibehalten und der Lenkwinkel für die Räder der mindestens einen Achse zunächst entsprechend dem vorgesehenen Überlagerungswinkel und/oder einer Änderung der an die Geschwindigkeit angepassten Lenkübersetzung verändert, wobei der Lenkwinkel durch Anpassen der Lenkübersetzung und/oder des Überlagerungswinkels ebenfalls an die veränderte Geschwindigkeit angepasst wird. Dabei ist es auch möglich, dass der Lenkradwinkel von dem Fahrer, d. h. nur von dem Fahrer jedoch nicht von dem Lenksystem verändert wird. Demnach spürt der Fahrer eine Änderung des Lenkwinkels um den Überlagerungswinkel zumindest nicht manuell, da nur der Überlagerungswinkel angepasst, jedoch ein von ihm jeweils aktuell eingestellter Lenkradwinkel bei dem Verfahren nicht beeinflusst wird. Bei einer Veränderung des Lenkradwinkels durch den Fahrer wird die Lenkübersetzung dynamisch verändert und angepasst. Das Verfahren ist demnach bei konstantem Lenkradwinkel, der zumindest zum Ändern der Richtung zunächst auf eine Winkelstellung ungleich 0°, d. h. größer oder kleiner 0°, und sich ändernder Geschwindigkeit durch den Fahrer eingestellt, wobei im Rahmen des Verfahrens der Überlagerungswinkel und somit der Lenkwinkel an den jeweils eingestellten Lenkradwinkel angepasst wird, wobei im ersten Fall der Überlagerungswinkel an den zunächst eingestellten und dann konstant gehaltenen Lenkradwinkel und der bei Einstellen des Lenkradwinkels herrschenden Geschwindigkeit angepasst und dann unabhängig von der Geschwindigkeit so lange konstant gehalten wird, bis der Lenkradwinkel durch den Fahrer verändert wird, und wobei im zweiten Fall der Überlagerungswinkel in Abhängigkeit von der Geschwindigkeit so angepasst wird, dass der Kurvenradius konstant bleibt und damit bei konstant bleibendem Lenkradwinkel der Lenkaufwand ebenfalls konstant bleibt.

Das Verfahren wird bei einer Kurvenfahrt, bspw. bei einer Fahrt in eine Kurve und/oder bei einer Fahrt durch eine Kurve, durchgeführt, wenn der Lenkradwinkel durch den Fahrer ungleich 0° eingestellt und/oder ausgehend von einem Lenkradwinkel, bspw. von 0°, verändert wird. Bei einer derartigen Kurve, wenn der von dem Fahrer eingestellte Lenkradwinkel je nach Definition größer oder kleiner 0° ist und/oder verändert wird, wird auch die Richtung des Fahrzeugs im Vergleich zu einer Geradeausfahrt verändert. Der Lenkradwinkel wird bei der Geradeausfahrt im Gegensatz zu der Kurvenfahrt je nach Definition auf den Wert 0° eingestellt sowie konstant beibehalten. Entsprechend wird der Lenkwinkel für die Räder mindestens einer der Achsen auf den Wert 0° eingestellt.

Der Lenkradwinkel wird und/oder ist zum Ändern der Richtung des Fahrzeugs von dem Fahrer üblicherweise auf den Wert ungleich 0° eingestellt und/oder verändert. Der Lenkwinkel für die Räder der mindestens einen Achse ergibt sich durch die jeweils eingestellte Lenkübersetzung, die das Verhältnis des Lenkradwinkels zum Lenkwinkel definiert, wobei sich der Lenkwinkel aus dem Lenkradwinkel zuzüglich dem Überlagerungswinkel ergibt. Falls der Lenkradwinkel auf den Wert 0° eingestellt wird und/oder ist, wird und/oder ist auch der jeweilige Lenkwinkel und somit der Überlagerungswinkel auf den Wert 0° eingestellt, weshalb von dem Fahrzeug dann die Geradeausfahrt durchgeführt wird. Der Wert des Lenkradwinkels und der unter Berücksichtigung des Überlagerungswinkels daraus resultierende Lenkwinkel für die Räder der mindestens einen Achse beschreibt jeweils eine Abweichung von dem Wert von 0° für den Lenkradwinkel, den Überlagerungswinkel und somit den Lenkwinkel der mindestens einen Achse bei der Geradeausfahrt.

Durch Ändern bzw. Anpassen der Lenkübersetzung für die Räder der mindestens einen Achse wird eine Lenkübersetzung für die Räder der vorderen Achse und/oder eine Lenkübersetzung für die Räder der hinteren Achse in Abhängigkeit von der Änderung der aktuellen Geschwindigkeit automatisch verändert. Außerdem wird der Lenkwinkel abhängig von dem manuell eingestellten Lenkradwinkel sowie der Lenkübersetzung und/oder dem Überlagerungswinkel, die bzw. der an die Geschwindigkeit angepasst wird, ebenfalls automatisch an die Geschwindigkeit angepasst, d. h. geändert bzw. eingestellt. Dabei wird der Überlagerungswinkel bspw. abhängig von einer Differenz zwischen dem ersten Wert und dem zweiten Wert der Geschwindigkeit eingestellt.

Im zweiten Fall wird eine Lenkübersetzung für die Räder der vorderen Achse und/oder eine Lenkübersetzung für die Räder der hinteren Achse in Abhängigkeit von einer Änderung der Geschwindigkeit des Fahrzeugs, bspw. ausgehend von dem ersten Wert auf einen aktuellen zweiten Wert automatisch verändert, wobei der Lenkradwinkel und der Lenkaufwand beibehalten wird.

In Ausgestaltung wird für den Fall, dass die Geschwindigkeit durch Bremsen verringert wird, die Lenkübersetzung verringert und daraus resultierend der Lenkwinkel aufgrund einer Erhöhung des Überlagerungswinkels automatisch erhöht. Alternativ oder ergänzend wird für den Fall, dass die Geschwindigkeit durch Beschleunigen erhöht wird, die Lenkübersetzung erhöht und daraus resultierend der Lenkwinkel aufgrund einer Verringerung des Überlagerungswinkels automatisch verringert.

In Ausgestaltung wird die Lenkübersetzung unter Berücksichtigung einer funktionalen Abhängigkeit der Lenkübersetzung von der Geschwindigkeit proportional zu mindestens einer Potenz der Geschwindigkeit, bspw. proportional zu der Geschwindigkeit und/oder proportional zu einem Quadrat der Geschwindigkeit verändert. Falls die funktionale Abhängigkeit der Lenkübersetzung von der Geschwindigkeit einem Polynom n-ten Grads entspricht, wird die Lenkübersetzung bei Änderung der Geschwindigkeit entsprechend diesem Polynom n-ten Grads eingestellt.

Die Lenkübersetzung wird in Ausgestaltung unter Beibehaltung des Lenkradwinkels entsprechend einer Änderung der Geschwindigkeit automatisch verändert und somit angepasst.

Bei der Fahrt des Fahrzeugs in die und/oder durch die Kurve wird eine aktuell eingestellte vordere Lenkübersetzung zwischen dem Lenkradwinkel des Lenkrads und dem Lenkwinkel der Räder der vorderen Achse und/oder eine aktuell eingestellte hintere Lenkübersetzung zwischen dem Lenkradwinkel des Lenkrads und dem Lenkwinkel der Räder der hinteren Achse ermittelt. Die Geschwindigkeit des Fahrzeugs wird ebenfalls ermittelt, wobei die vordere Lenkübersetzung und die hintere Lenkübersetzung an die Geschwindigkeit angepasst werden.

Die Geschwindigkeit wird von dem Fahrer durch Betätigung mindestens eines Geschwindigkeitsstellelements, bspw. eines Gaspedals und/oder eines Bremspedals, eingestellt und durch Verändern der Betätigung bzw. einer Beaufschlagung des mindestens einen Geschwindigkeitsstellelements verändert, bspw. durch Beschleunigen vergrößert oder durch Bremsen verringert. Dabei wird jedoch im ersten Fall bei weiterer Veränderung der Geschwindigkeit die Lenkübersetzung konstant gehalten, d. h. der Überlagerungswinkel und der Lenkwinkel bleiben unverändert, solange der Fahrer den Lenkradwinkel beibehält.

Das erfindungsgemäße Lenksystem ist zum Lenken eines Fahrzeugs ausgebildet, das ein Lenkrad und eine vordere Achse sowie eine hintere Achse mit Rädern aufweist. Das Lenksystem weist das Lenkrad und in Ausgestaltung je nach Definition ein Steuergerät auf. Abhängig von einem Lenkradwinkel, der für das Lenkrad von einem Fahrer des Fahrzeugs manuell einstellbar bzw. einzustellen ist, und einer von dem Steuergerät automatisch einstellbaren Lenkübersetzung für Räder mindestens einer der Achsen ist ein Lenkwinkel einstellbar bzw. einzustellen, wobei die Lenkübersetzung ein Verhältnis des Lenkradwinkels zu dem Lenkwinkel festlegt und/oder definiert. Außerdem ergibt sich der Lenkwinkel aus dem Lenkradwinkel zuzüglich eines Überlagerungswinkels. Es ist vorgesehen, dass das Fahrzeug in einer Situation mit einer Geschwindigkeit mit einem ersten Wert in eine Kurve auf einer Kreisbahn mit einem Radius fährt, wobei von dem Fahrer ein Lenkradwinkel eingestellt wird. Das Lenksystem ist dazu ausgebildet, unter Berücksichtigung einer Kennlinie für einen Zusammenhang des Überlagerungswinkels und einer Änderung der Geschwindigkeit automatisch einen von dem ersten Wert der Geschwindigkeit abhängigen Überlagerungswinkel einzustellen. Das Lenksystem ist dazu ausgebildet, mindestens einen Fall unter zwei möglichen Fällen zu berücksichtigen und/oder durchzuführen. Das Lenksystem ist bei konstant gehaltenem Lenkradwinkel dazu ausgebildet, in einem ersten Fall den Überlagerungswinkel und die Lenkübersetzung konstant zu halten, und/oder in einem zweiten Fall die Lenkübersetzung in Abhängigkeit von der Geschwindigkeit automatisch zu verändern und den Radius der Kreisbahn konstant zu halten.

In dem ersten Fall ist bspw. vorgesehen, die Lenkübersetzung konstant zu halten, indem der Überlagerungswinkel konstant gehalten wird, solange der Lenkradwinkel konstant bleibt. Erst wenn der Lenkradwinkel durch den Fahrer zum Ausgleich der sich auf den Kurvenradius auswirkenden physikalischen Kräfte geändert wird, wird auch der Lenkwinkel bzw. der Überlagerungswinkel geändert. Alternativ oder ergänzend ist das Lenksystem in einem zweiten Fall dazu ausgebildet, die Lenkübersetzung kontinuierlich automatisch zu verändern und damit den wirkenden physikalischen Kräften dynamisch entgegen zu wirken und dabei den Lenkradwinkel in Folge bzw. nachfolgend konstant zu halten.

Das Lenksystem weist in Ausgestaltung mindestens einen Aktuator auf, der mindestens einer der Achsen zugeordnet und dazu ausgebildet ist, den Lenkwinkel für die Räder der mindestens einen Achse unter Berücksichtigung des manuell einstellbaren Lenkradwinkels und der automatisch einstellbaren Lenkübersetzung einzustellen.

Mit dem Verfahren ist es möglich, ein Einlenken des Fahrzeugs bei der Kurvenfahrt, d. h. bei der Fahrt in und/oder durch die Kurve, wenn sich die Richtung des Fahrzeugs verändert, zu minimieren oder sogar zu unterdrücken.

Bei einem Lenken des Fahrzeugs ist durch den Fahrer ein Lenkaufwand zu betreiben, wobei der Lenkaufwand ein Verhältnis zwischen dem Lenkradwinkel und einem sich einstellenden Radius der Kreisbahn (Kurvenradius) beschreibt, auf/oder entlang der das Fahrzeug durch die Kurve fährt. Weiterhin wird eine Änderung der Lenkübersetzung an mindestens einer Achse, bspw. eine Lenkübersetzung der vorderen und/oder hinteren Achse, im ersten Fall nur bei einer Änderung des Lenkradwinkels durch den Fahrer erlaubt. Im zweiten Fall bleibt durch Anpassen mindestens einer Lenkübersetzung, bspw. der Lenkübersetzungen für beide Achsen, ein Lenkaufwand aufgrund der zu berücksichtigenden physikalischen Parameter, die die Fahrt des Fahrzeugs in und/oder durch die Kurve beeinflussen, unverändert. Somit ergibt sich, dass der Lenkaufwand bei einem Verzögerungs- oder Beschleunigungsvorgang bei gleichbleibendem Lenkradwinkel gleich bleibt.

Die einzelne Lenkübersetzung für eine jeweilige Achse, d. h. die vordere und hintere Achse, ergibt sich aus einem Verhältnis des Lenkradwinkels zu einem Lenkwinkel bzw. Radlenkwinkel mindestens eines Rads, in der Regel beider Räder, einer jeweiligen Achse. Ein gesamter Lenkaufwand ergibt sich aus dem Verhältnis des Lenkradwinkels zu dem resultierenden Radius der Kreisbahn, die für das Fahrzeug bei der Fahrt in und/oder durch die Kurve vorgesehen ist. Dieser Lenkaufwand bleibt gleich. Hierbei werden zumindest indirekt die einzelnen Lenkübersetzungen der vorderen und hinteren Achse sowie mindestens ein weiterer Parameter des Fahrzeugs, z. B. der Radstand, berücksichtigt.

Im Rahmen des Verfahrens werden im zweiten Fall nachfolgende Formeln (1) und (2) verwendet, mit denen berechnet wird, wie der Lenkwinkel durch Anpassen des Überlagerungswinkels der vorderen Achse angepasst wird, wenn das Fahrzeug bei gleichbleibender Stellung des Lenkrads und somit bei gleichbleibendem Lenkradwinkel bei der Fahrt in die und/oder durch die Kurve gebremst wird, wobei sich der Radius der Kreisbahn, auf der sich das Fahrzeug befindet und/oder die es beschreibt, nicht verändert.

Dabei umfassen die beiden Formeln (1) und (2) folgende physikalische Parameter des Fahrzeugs:
d_v = Lenkwinkel der vorderen Achse,
d_h = Lenkwinkel der hinteren Achse,
I = Radstand,
R = Radius der Kreisbahn, die sich ergibt, wenn das Fahrzeug in und/oder durch die Kurve fährt,
m_v = Achslast der vorderen Achse,
m_h = Achslast der hinteren Achse,
v = Geschwindigkeit des Fahrzeugs,
c_v = Schräglaufsteifigkeit der Räder der vorderen Achse,
c_h = Schräglaufsteifigkeit der Räder der hinteren Achse.

Demnach werden der Lenkradwinkel w_lr, der von einer Stellung des Lenkrads abhängig ist, der Lenkwinkel d_v der vorderen Achse und der Lenkwinkel d_h der hinteren Achse berücksichtigt. Der vordere Lenkwinkel d_v ergibt sich aus dem Lenkradwinkel w_lr zuzüglich eines Überlagerungswinkels, wobei es möglich ist, dass für die Räder der vorderen Achse ein vorderer Überlagerungswinkel vorgesehen ist. Für die Räder der vorderen Achse wird hierbei eine Dynamiklenkung umgesetzt, wobei aus dem jeweils eingestellten Lenkradwinkel w_lr bspw. von dem Steuergerät des Lenksystems unter Berücksichtigung des Überlagerungswinkels der vordere Lenkwinkel d_v eingestellt wird. Der hintere Lenkradwinkel d_v wird von dem Steuergerät des Lenksystems eingestellt. Der Überlagerungswinkel ist von der Geschwindigkeit v und dem Radius R der Kreisbahn abhängig. Eine jeweilige Lenkübersetzung ergibt sich aus dem Lenkradwinkel w_lr durch einen Lenkwinkel d_v, d_h einer jeweiligen Achse, d. h. eine vordere Lenkübersetzung Lü_v = w_lr/d_v und eine hintere Lenkübersetzung Lü_h = w_lr/d_h. Ein Lenkaufwand L_a = w_lr/R ergibt sich aus einem Verhältnis des Lenkradwinkels w_lr zu dem Radius R. $d _ v = I / R + \left(m_v/c_v-m_h/c_h\right) * {v}^{2} / R + d _ h$ (1)

Falls nun mit konstantem Lenkradwinkel in die Kurve hineingebremst bzw. bei der Fahrt in der Kurve gebremst und die Geschwindigkeit v reduziert wird, bleiben die Parameter I, R, m_v, c_v, m_h, c_h und d_h unverändert. Der Lenkwinkel d_v der vorderen Achse bzw. der vorderen Räder ergibt sich aus der Änderung der Geschwindigkeit v bzw. einem Quadrat v² der Geschwindigkeit.

Zudem gilt: Falls nun mit konstantem Lenkradwinkel aus einer Kurve herausbeschleunigt bzw. bei der Fahrt in der Kurve beschleunigt und die Geschwindigkeit v erhöht wird, bleiben die Parameter I, R, m_v, c_v, m_h, c_h und d_h unverändert. Der Lenkwinkel d_v der vorderen Achse bzw. der vorderen Räder ergibt sich aus der Änderung der Geschwindigkeit v bzw. einem Quadrat v² der Geschwindigkeit. $d _ h = - I / R - \left(m_v/c_v-m_h/c_h\right) * {v}^{2} / R + d _ v$ (2)

Falls mit konstantem Lenkradwinkel in die Kurve hineingebremst bzw. bei der Fahrt in der Kurve gebremst und die Geschwindigkeit v reduziert wird, bleiben die Parameter I, R, m_v, c_v, m_h, c_h und d_v gleich. Der Lenkwinkel d_h der hinteren Achse bzw. der hinteren Räder ergibt sich aus der Änderung der Geschwindigkeit v bzw. deren Quadrat v².

Zudem gilt: Falls nun mit konstantem Lenkradwinkel aus einer Kurve herausbeschleunigt bzw. bei der Fahrt in der Kurve beschleunigt und die Geschwindigkeit v erhöht wird, bleiben die Parameter I, R, m_v, c_v, m_h, c_h und d_v unverändert. Der Lenkwinkel d_h der hinteren Achse bzw. der hinteren Räder ergibt sich aus der Änderung der Geschwindigkeit v bzw. einem Quadrat v² der Geschwindigkeit.

Weiterhin ist es möglich, dass eine Zentrifugalkraft F_z = m * v²/R berücksichtigt wird, die auf das Fahrzeug mit einer gesamten Masse m bei der Kurvenfahrt auf der Kurvenbahn mit dem Radius R mit der Geschwindigkeit v wirkt. Dabei ist es möglich, dass eine jeweilige Lenkübersetzung Lü_v, Lü_h und/oder der Lenkaufwand L_a zur Zentrifugalkraft F_z proportional ist bzw. sind. Das Lenksystem des Fahrzeugs umfasst in Ausgestaltung u. a. die lenkbare hintere Achse und/oder eine Überlagerungslenkung für die vordere Achse, womit das Fahrzeug situationsgerecht agilisiert und/oder stabilisiert sowie die Lenkübersetzung variabel gestaltet wird. Weiterhin wird berücksichtigt, dass sich die Lenkübersetzungen der vorderen und hinteren Achse, d. h. das Verhältnis des Lenkradwinkels zu den sich einstellenden Lenkwinkeln bzw. Radlenkwinkeln an der vorderen und hinteren Achse, auf den Lenkaufwand, also das Verhältnis zwischen dem Lenkradwinkel und dem sich einstellenden Radius der Kreisbahn, der das Fahrzeug folgt, auswirken. Die Lenkübersetzungen sind von der Geschwindigkeit abhängig, weshalb diese im zweiten Fall bei sich ändernder Geschwindigkeit variiert werden.

Bremst der Fahrer das Fahrzeug z. B. bei gleichbleibendem Lenkradwinkel bei der Fahrt in die Kurve, wird dessen Geschwindigkeit reduziert. Außerdem wird im zweiten Fall die Lenkübersetzung für die mindestens eine Achse reduziert. Dabei bleibt der Radius der für das Fahrzeug vorgesehenen Kreisbahn in die und/oder durch die Kurve bei gleichbleibendem Lenkradwinkel unverändert, wobei der Fahrer nicht dazu gezwungen wird, den Lenkradwinkel zu korrigieren, da der Lenkwinkel aufgrund der Änderung bzw. Anpassung der Lenkübersetzung ebenfalls automatisch angepasst wird. Bei Durchführung des Verfahrens bleibt auch der applizierte Lenkaufwand unter Beibehaltung des Radius der Kreisbahn konstant bzw. unverändert.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsformen in der Zeichnung schematisch dargestellt und wird unter Bezugnahme auf die Zeichnung schematisch und ausführlich beschrieben.

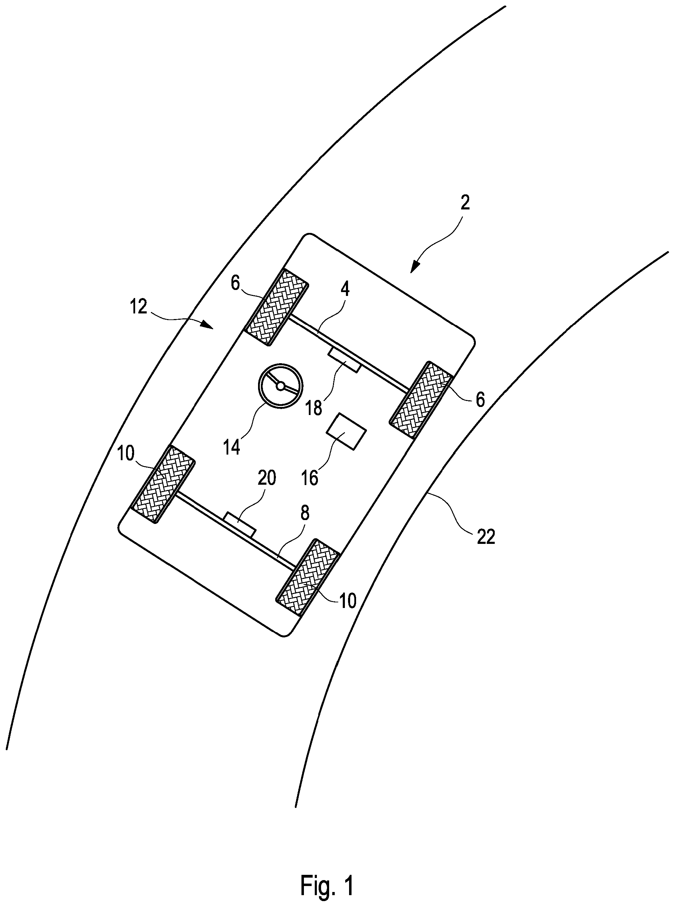

Figur 1 zeigt in schematischer Darstellung ein Fahrzeug, das eine Ausführungsform des erfindungsgemäßen Lenksystems aufweist, bei Durchführung einer Ausführungsform des erfindungsgemäßen Verfahrens.

Das in Figur 1 schematisch gezeigt Fahrzeug 2 umfasst eine vordere Achse 4 mit vorderen Rädern 6 und eine hintere Achse 8 mit hinteren Rädern 10. Die Ausführungsform des Lenksystems 12 weist ein Lenkrad 14, einen vorderen Aktuator 18 zum Einstellen eines Lenkwinkels als Parameter der Räder 6 der vorderen Achse 4, einen hinteren Aktuator 20 zum Einstellen eines Lenkwinkels als Parameter der Räder 10 der hinteren Achse 4 und ein Steuergerät 16 auf.

Eine Richtung des Fahrzeugs 2 wird durch Bedienen des Lenkrads 14 von einem Fahrer des Fahrzeugs 2 beeinflusst, wobei ein Lenkradwinkel des Lenkrads 14 als Parameter des Fahrzeugs 2 eingestellt, bspw. verändert wird. Ausgehend von dem jeweils aktuell eingestellten Lenkradwinkel des Lenkrads 14 werden die Aktuatoren 18, 20 von dem Steuergerät 16 angesteuert, wodurch wiederum die Achsen 4, 8 und die daran angeordneten Räder 6, 10 gelenkt werden. Dabei wird für die Räder 6 der vorderen Achse 4 durch eine von dem Steuergerät 16 eingestellte vordere Lenkübersetzung ein vorderer Lenkwinkel und für die Räder 10 der hinteren Achse 8 durch eine von dem Steuergerät 16 eingestellte hintere Lenkübersetzung ein hinterer Lenkwinkel eingestellt. Dabei wird durch die automatisch eingestellte und von dem Steuergerät 16 veränderbare jeweilige Lenkübersetzung ein vorgesehenes Verhältnis des Lenkradwinkels zu dem Lenkwinkel der jeweiligen Achse 4, 8 festgelegt bzw. definiert. Falls das Fahrzeug 2 in und/oder durch eine Kurve 22 fährt, bewegt sich für das Fahrzeug 2 auf einer Kreisbahn, die einen Radius aufweist bzw. durch den Radius definierbar ist. Dabei ergibt sich der Lenkwinkel aus dem Lenkradwinkel zuzüglich eines Überlagerungswinkels, der unter Berücksichtigung einer Kennlinie von der Geschwindigkeit des Fahrzeugs und dem Radius der Kreisbahn, die das Fahrzeug in der Kurve 22 beschreibt, abhängig ist.

Bei der Ausführungsform des Verfahrens zum Lenken eines Fahrzeugs 2 ist vorgesehen, dass eine Richtung des Fahrzeugs 2 bei einer Kurvenfahrt durch die Kurve 22 verändert wird, wobei der Lenkradwinkel und mindestens ein aufgrund einer jeweiligen Lenkübersetzung und einem Überlagerungswinkel resultierender Lenkwinkel für die Räder 6, 10 der mindestens einen Achse 4, 8 ungleich 0° bzw. größer oder kleiner 0° ist und/oder verändert wird. Dabei wird weiterhin ein jeweiliger Lenkwinkel aufgrund der Anpassung der Lenkübersetzung an die veränderte Geschwindigkeit automatisch an die Geschwindigkeit angepasst.

Falls bei der Kurvenfahrt unter Änderung der Richtung des Fahrzeugs 2 die Geschwindigkeit des Fahrzeugs 2 weiter verändert wird, wird die Lenkübersetzung unter Berücksichtigung einer funktionalen Abhängigkeit der Lenkübersetzung von der Geschwindigkeit ebenfalls automatisch verändert, üblicherweise bei einem Bremsen des Fahrzeugs 2 verringert und bei einem Beschleunigen des Fahrzeugs 2 vergrößert, wobei jedoch der Überlagerungswinkel dynamisch so angepasst wird, dass der Lenkaufwand konstant bleibt. Aufgrund dessen wird der Lenkwinkel beim Bremsen vergrößert und beim Beschleunigen automatisch verringert, ohne dass der Fahrer einlenken oder auflenken muss.

Dabei wird die Lenkübersetzung in einem ersten Fall konstant gehalten, wobei erst bei einem Verändern des Lenkradwinkels auch die Lenkübersetzung geändert wird. In einem zweiten Fall wird die Lenkübersetzung automatisch verändert und der Lenkradwinkel konstant gehalten.

## Patentansprüche

1. Verfahren zum Lenken eines Fahrzeugs (2), das ein Lenksystem (12) mit einem Lenkrad (14) und eine vordere Achse (4) sowie eine hintere Achse (8) mit Rädern (6, 10) aufweist, wobei vorgesehen ist, dass eine Richtung des Fahrzeugs (2) von einem Fahrer des Fahrzeugs (2) durch Einstellen eines Lenkradwinkels des Lenkrads (14) manuell eingestellt wird, wodurch für die Räder (6, 10) von mindestens einer der Achsen (4, 8) ein Lenkwinkel eingestellt wird, der sich aus dem Lenkradwinkel zuzüglich eines Überlagerungswinkels ergibt, wobei von einer automatisch einstellbaren Lenkübersetzung für Räder (6, 10) von mindestens einer der Achsen (4, 8) ein Verhältnis des Lenkradwinkels zu dem Lenkwinkel für die Räder (6, 10) festlegt wird, wobei das Fahrzeug (2) mit einer Geschwindigkeit mit einem ersten Wert in eine Kurve (22) auf einer Kreisbahn mit einem Radius fährt, wobei von dem Fahrer ein Lenkradwinkel eingestellt wird, wobei von einem Lenksystem (12) unter Berücksichtigung einer Kennlinie für einen Zusammenhang des Überlagerungswinkels und der Geschwindigkeit automatisch ein von dem ersten Wert der Geschwindigkeit abhängiger Überlagerungswinkel eingestellt wird, wobei mindestens ein Fall unter zwei möglichen Fällen berücksichtigt wird, wobei bei konstant gehaltenem Lenkradwinkel in einem ersten Fall der Überlagerungswinkel und die Lenkübersetzung von dem Lenksystem (12) konstant gehalten werden, und/oder wobei in einem zweiten Fall von dem Lenksystem (12) die Lenkübersetzung in Abhängigkeit von der Geschwindigkeit automatisch verändert wird und der Radius der Kreisbahn konstant gehalten wird, **dadurch gekennzeichnet, dass** der Radius der Kreisbahn durch zusätzliches Einstellen des Überlagerungswinkels im ersten Fall angepasst wird, wenn der Fahrer den Lenkradwinkel ändert, und im zweiten Fall automatisch angepasst wird, wobei der Lenkradwinkel konstant gehalten wird.

2. Verfahren nach Anspruch 1, bei dem die Lenkübersetzung im ersten Fall konstant bleibt, so lange der von dem Fahrer eingestellte Lenkradwinkel konstant bleibt, und bei dem die Lenkübersetzung im ersten Fall verändert wird, wenn der Lenkradwinkel von dem Fahrer verändert wird, wobei der Radius der Kreisbahn konstant bleibt.

3. Verfahren nach Anspruch 1 oder 2, bei dem im zweiten Fall der Überlagerungswinkel für die Räder (6, 10) der mindestens einen Achse (4, 8) entsprechend einer Änderung der Lenkübersetzung verändert wird.

4. Verfahren nach einem der voranstehenden Ansprüche, bei dem die Geschwindigkeit von dem ersten Wert auf einen zweiten Wert reduziert wird.

5. Verfahren nach einem der voranstehenden Ansprüche, bei dem eine Lenkübersetzung für die Räder (6) der vorderen Achse (4) und/oder eine Lenkübersetzung für die Räder (10) der hinteren Achse (8) in Abhängigkeit von einer Änderung des Lenkradwinkels verändert wird.

6. Verfahren nach einem der voranstehenden Ansprüche, bei dem für den Fall, dass die Geschwindigkeit verringert wird, die Lenkübersetzung verringert wird, und/oder bei dem für den Fall, dass die Geschwindigkeit erhöht wird, die Lenkübersetzung erhöht wird.

7. Lenksystem zum Lenken eines Fahrzeugs (2), das ein Lenkrad (14) und eine vordere Achse (4) sowie eine hintere Achse (8) mit Rädern (6, 10) aufweist, wobei vorgesehen ist, dass eine Richtung des Fahrzeugs (2) von einem Fahrer des Fahrzeugs (2) durch Einstellen eines Lenkradwinkels des Lenkrads (14) manuell einstellbar ist, wobei das Lenksystem (12) dazu ausgebildet ist, für die Räder (6, 10) von mindestens einer der Achsen (4, 8) abhängig von dem eingestellten Lenkradwinkel einen Lenkwinkel einzustellen, der sich aus dem Lenkradwinkel zuzüglich eines Überlagerungswinkels ergibt, wobei eine von dem Lenksystem (12) automatisch einstellbare Lenkübersetzung für Räder (6, 10) von mindestens einer der Achsen (4, 8) ein Verhältnis des Lenkradwinkels zu dem Lenkwinkel für die Räder (6, 10) festlegt, wobei wenn das Fahrzeug (2) mit einer Geschwindigkeit mit einem ersten Wert in eine Kurve (22) auf einer Kreisbahn mit einem Radius fährt und von dem Fahrer ein Lenkradwinkel eingestellt wird, das Lenksystem (12) dazu ausgebildet ist, unter Berücksichtigung einer Kennlinie für einen Zusammenhang des Überlagerungswinkels und der Geschwindigkeit automatisch einen von dem ersten Wert der Geschwindigkeit abhängigen Überlagerungswinkel einzustellen, wobei das Lenksystem (12) dazu ausgebildet ist, mindestens einen Fall unter zwei möglichen Fällen zu berücksichtigen, wobei das Lenksystem (12) bei konstant gehaltenem Lenkradwinkel in einem ersten Fall dazu ausgebildet ist, den Überlagerungswinkel und die Lenkübersetzung konstant zu halten, und/oder wobei das Lenksystem (12) in einem zweiten Fall dazu ausgebildet ist, die Lenkübersetzung in Abhängigkeit von der Geschwindigkeit automatisch zu verändern und den Radius der Kreisbahn konstant zu halten, **dadurch gekennzeichnet, dass** der Radius der Kreisbahn durch zusätzliches Einstellen des Überlagerungswinkels im ersten Fall angepasst wird, wenn der Fahrer den Lenkradwinkel ändert, und im zweiten Fall automatisch angepasst wird, wobei der Lenkradwinkel konstant gehalten wird.

8. Lenksystem nach Anspruch 7, das mindestens einen Aktuator (18, 20) aufweist, der mindestens einer Achse (4, 8) zugeordnet und dazu ausgebildet ist, den Lenkwinkel für die Räder (6, 10) der mindestens einen Achse (4, 8) unter Berücksichtigung des manuell einstellbaren Lenkradwinkels und der automatisch einstellbaren Lenkübersetzung einzustellen.

## Claims

1. Method for steering a vehicle (2), which comprises a steering system (12) with a steering wheel (14) and a front axle (4) as well as a rear axle (8) with wheels (6, 10), whereby it is provided that a direction of the vehicle (2) is adjusted manually by a driver of the vehicle (2) through adjustment of a steering wheel angle of the steering wheel (14), as a result of which, for the wheels (6, 10) of at least one of the axles (4, 8), a steering angle is adjusted, which is obtained from the steering wheel angle plus a superposition angle, whereby, through an automatically adjustable steering ratio for wheels (6, 10) of at least one of the axles (4, 8), a ratio of the steering wheel angle to the steering angle for the wheels (6, 10) is set, whereby the vehicle (2) travels at a speed with a first value into a curve (22) on a circular path with a radius, whereby a steering wheel angle is adjusted by the driver, whereby a superposition angle that is a function of the first value of the speed is automatically adjusted by a steering system (12), taking into consideration a characteristic curve for a relation between the superposition angle and the speed, whereby at least one case of two possible cases is taken into consideration, whereby, in a first case, with a steering wheel angle that is held constant, the superposition angle and the steering ratio are kept constant by the steering system (12), and/or whereby, in a second case, the steering ratio is automatically changed by the steering system (12) as a function of the speed and the radius of the circular path is kept constant, **characterised in that** the radius of the circular path is adapted in the first case through additional adjustment of the superposition angle, if the driver changes the steering wheel angle, and is adapted automatically in the second case, whereby the steering wheel angle is kept constant.

2. Method according to claim 1, in which in the first case the steering ratio remains constant, as long as the steering wheel angle adjusted by the driver remains constant, and in which in the first case the steering ratio is altered, if the steering wheel angle is altered by the driver, whereby the radius of the circular path remains constant.

3. Method according to claim 1 or 2, in which in the second case the superposition angle for the wheels (6, 10) of the at least one axle (4, 8) is altered in accordance with a change in the steering ratio.

4. Method according to any of the preceding claims, in which the speed is reduced from the first value to a second value.

5. Method according to any of the preceding claims, in which a steering ratio for the wheels (6) of the front axle (4) and/or a steering ratio for the wheels (10) of the rear axle (8) is/are changed depending on a change in the steering wheel angle.

6. Method according to any of the preceding claims, in which, for the case that the speed is reduced, the steering ratio will be reduced, and/or in which, for the case that the speed is increased, the steering ratio will be increased.

7. Steering system for steering a vehicle (2), comprising a steering wheel (14) and a front axle (4) as well as a rear axle (8) with wheels (6, 10), whereby it is provided that a direction of the vehicle (2) is adjustable manually by a driver of the vehicle (2) through adjustment of a steering wheel angle of the steering wheel (14), whereby the steering system (12) is designed to adjust a steering angle for the wheels (6, 10) of at least one of the axles (4, 8), depending on the adjusted steering wheel angle, said steering angle being obtained from the steering wheel angle plus a superposition angle, whereby a steering ratio that can be automatically adjusted by the steering system (12) for wheels (6, 10) of at least one of the axles (4, 8) sets a ratio of the steering wheel angle to the steering angle for the wheels (6, 10), whereby, when the vehicle (2) travels into a curve (22) on a circular path with a radius at a speed with a first value and a steering wheel angle is adjusted by the driver, the steering system (12) is designed to automatically adjust a superposition angle that is a function of the first value of the speed, taking into consideration a characteristic curve for a relation between the superposition angle and the speed, whereby the steering system (12) is designed to take into consideration at least one case of two possible cases, whereby, in a first case, when the steering wheel angle is constant, the steering system (12) is designed to keep constant the superposition angle and the steering ratio, and/or whereby, in a second case, the steering system (12) is designed to change automatically the steering ratio as a function of the speed and to keep constant the radius of the circular path, **characterised in that** the radius of the circular path is adapted in the first case through additional adjustment of the superposition angle, if the driver changes the steering wheel angle, and is adapted automatically in the second case, whereby the steering wheel angle is kept constant.

8. Steering system according to claim 7, comprising at least one actuator (18, 20), which is associated with at least one axle (4, 8) and is designed to adjust the steering angle for the wheels (6, 10) of the at least one axle (4, 8), taking into consideration the manually adjustable steering wheel angle and the automatically adjustable steering ratio.

## Revendications

1. Procédé de direction d'un véhicule (2) qui présente un système de direction (12) avec un volant (14) et un essieu avant (4) ainsi qu'un essieu arrière (8) avec des roues (6, 10), dans lequel il est prévu qu'une direction du véhicule (2) soit réglée manuellement par un conducteur du véhicule (2) par réglage d'un angle du volant (14), par quoi un angle de direction est réglé pour les roues (6, 10) d'au moins un des essieux (4, 8), lequel résulte de l'angle de volant plus un angle de superposition, dans lequel un rapport de l'angle de volant à l'angle de direction pour les roues (6, 10) est fixé par une démultiplication de direction réglable automatiquement pour des roues (6, 10) d'au moins un des essieux (4, 8), dans lequel le véhicule (2) se déplace à une vitesse avec une première valeur dans une courbe (22) sur un trajet circulaire avec un rayon, dans lequel un angle de volant est réglé par le conducteur, dans lequel un angle de superposition dépendant de la première valeur de la vitesse est réglé par un système de direction (12) en tenant compte d'une ligne caractéristique pour un rapport de l'angle de superposition et de la vitesse, dans lequel au moins un cas parmi deux cas possibles est pris en considération, dans lequel en cas d'angle de volant maintenu de manière constante dans un premier cas l'angle de superposition et la démultiplication de direction sont maintenus de manière constante par le système de direction (12), et/ou dans lequel dans un second cas la démultiplication de direction est modifiée automatiquement par le système de direction (12) en fonction de la vitesse et le rayon du trajet circulaire est maintenu de manière constante, **caractérisé en ce que** le rayon du trajet circulaire est adapté par réglage supplémentaire de l'angle de superposition dans le premier cas lorsque le conducteur modifie l'angle de volant, et dans le second cas est adapté automatiquement, dans lequel l'angle de volant est maintenu de manière constante.

2. Procédé selon la revendication 1, dans lequel la démultiplication de direction reste constante dans le premier cas tant que l'angle de volant réglé par le conducteur reste constant, et dans lequel la démultiplication de direction est modifiée dans le premier cas lorsque l'angle de volant est modifié par le conducteur, dans lequel le rayon du trajet circulaire reste constant.

3. Procédé selon la revendication 1 ou 2, dans lequel dans le second cas l'angle de superposition pour les roues (6, 10) d'au moins un essieu (4, 8) est modifié selon une modification de la démultiplication de direction.

4. Procédé selon l'une des revendications précédentes, dans lequel la vitesse est réduite de la première valeur à une seconde valeur.

5. Procédé selon l'une des revendications précédentes, dans lequel une démultiplication de direction pour les roues (6) de l'essieu avant (4) et/ou une démultiplication de direction pour les roues (10) de l'essieu arrière (8) est modifiée en fonction d'une modification de l'angle de volant.

6. Procédé selon l'une des revendications précédentes, dans lequel pour le cas où la vitesse est réduite, la démultiplication de direction est réduite, et/ou dans lequel pour le cas où la vitesse est augmentée, la démultiplication de direction est augmentée.

7. Système de direction pour la direction d'un véhicule (2) qui présente un volant (14) et un essieu avant (4) ainsi qu'un essieu arrière (8) avec des roues (6, 10), dans lequel il est prévu qu'une direction du véhicule (2) puisse être réglée manuellement par un conducteur du véhicule (2) par réglage d'un angle du volant (14), dans lequel le système de direction (12) est réalisé afin de régler pour les roues (6, 10) d'au moins un des essieux (4, 8) en fonction de l'angle de volant réglé un angle de direction qui résulte de l'angle de volant plus un angle de superposition, dans lequel une démultiplication de direction réglable automatiquement par le système de direction (12) pour des roues (6, 10) d'au moins un des essieux (4, 8) fixe un rapport de l'angle de volant à l'angle de direction pour les roues (6, 10), dans lequel lorsque le véhicule (2) se déplace à une vitesse avec une première valeur dans une courbe (22) sur un trajet circulaire avec un rayon et un angle de volant est réglé par le conducteur, le système de direction (12) est réalisé afin de régler en tenant compte d'une ligne caractéristique pour un rapport de l'angle de superposition et de la vitesse automatiquement un angle de superposition dépendant de la première valeur de la vitesse, dans lequel le système de direction (12) est réalisé afin de tenir compte d'au moins un cas parmi deux cas possibles, dans lequel le système de direction (12) est réalisé en cas d'angle de volant maintenu de manière constante dans un premier cas afin de maintenir de manière constante l'angle de superposition et la démultiplication de direction, et/ou dans lequel le système de direction (12) est réalisé dans un second cas afin de modifier automatiquement la démultiplication de direction en fonction de la vitesse et de maintenir de manière constante le rayon du trajet circulaire, **caractérisé en ce que** le rayon du trajet circulaire est adapté par réglage supplémentaire de l'angle de superposition dans le premier cas lorsque le conducteur modifie l'angle de volant, et est adapté automatiquement dans le second cas, dans lequel l'angle de volant est maintenu de manière constante.

8. Système de direction selon la revendication 7 qui présente au moins un actionneur (18, 20) qui est associé à au moins un essieu (4, 8) et est réalisé afin de régler l'angle de direction pour les roues (6, 10) d'au moins un essieu (4, 8) en tenant compte de l'angle de volant réglable manuellement et de la démultiplication de direction réglable automatiquement.
